# EUROPEAN PATENT APPLICATION

(11) **EP 4 060 487 A1**
(43) Date of publication of application: **21.09.2022**
(21) Application number: 21163254.2
(22) Date of filing: 17.03.2021
(51) Int. Cl.: G06F 9/4401, G06F 9/54

(54) **ELECTRONIC CONTROL UNIT, VEHICLE COMPRISING THE ELECTRONIC CONTROL UNIT AND COMPUTER-IMPLEMENTED METHOD**

(71) Applicant: Aptiv Technologies Limited, St. Michael (BB)
(72) Inventor: Sharma, Avinash K, 42119 Wuppertal (DE); Baydoun, Hussein, 51643 Gummersbach (DE)
(74) Representative: Manitz Finsterwald Patent- und Rechtsanwaltspartnerschaft mbB

(57) **Abstract**

The present disclosure relates to an electronic control unit hosting an AUTOSAR operating system and a second operating system. A communication between the AUTOSAR operating system and the second operating system is performed by executing a transformation module and a coupling module by each of the operating systems wherein communication is performed through the transformation and coupling modules.

## Description

### FIELD

The present disclosure relates to an electronic control unit for a vehicle. The electronic control unit hosts an AUTOSAR operating system and a second operating system which is different from AUTOSAR.

### BACKGROUND

The AUTomotive Open System ARchitecture, or AUTOSAR, standardizes the electronics and software architectures used in modern cars, with the aim of simplifying the development and integration of vehicle-related software functions.

Modern cars are becoming more and more capable of supporting sophisticated functions, including self-navigation and maneuvering (autonomous driving), provide user entertainment, etc.

As a current trend, it can be observed that electronic control units which are based on SOCs having a MCU (Micro-Controller Unit) and a performance processor are used in modern cars. Particularly, the performance processors will allow a complex software architecture to be executed, wherein also several different operating systems can be executed in one electronic control unit or on one SOC. For example, for autonomous driving image processing and the execution of complex algorithms are necessary which require a high processing power.

These different operating systems can comprise Linux or QNX (a Unix-like real time operating system) which can be operated in parallel to a classic AUTOSAR operating system (OS).

The operation of two or more operating systems in parallel requires a data exchange/communication between the operating systems. Such a communication can be a bottleneck and can deteriorate the performance of the electronic control unit.

Many vendors of SOCs provide proprietary solutions for specific configurations. However, many of those solutions fail to provide a proper tooling for a software that is running on the AUTOSAR operating system. Particularly, latency, memory and complexity issues may arise.

Accordingly, there is a need to improve the parallel operation of the AUTOSAR operating system together with further operating systems in the same electronic control unit.

### SUMMARY

The present disclosure provides an electronic control unit, a vehicle and a computer-implemented method according to the independent claims. Embodiments are given in the subclaims, the description and the drawings.

In one aspect the present disclosure provides an electronic control unit for a vehicle, wherein
- the electronic control unit hosts an AUTOSAR operating system (AUTOSAR OS) and a second operating system which is different from AUTOSAR OS,
- the AUTOSAR operating system provides a runtime environment, RTE, for the execution of a software component, SWC,
- the electronic control unit executes a communication framework which provides communication functionality to allow communication between the AUTOSAR operating system and the second operating system,
wherein the communication framework comprises
- a transformation module having a data interface, the transformation module processes requested communication and serializes and/or deserializes data of the requested communication, and
- a coupling module which is connected to one transformation module and which establishes communication between the operating systems,
wherein the electronic control unit executes
- a first instance of the transformation module running on the AUTOSAR operating system, which processes requested communication of the RTE and serializes and/or deserializes data of the communication,
- a first instance of the coupling module running on the AUTOSAR operating system,
- a second instance of the coupling module running on the second operating system, which establishes a communication with the first instance of the coupling module,
- a second instance of the transformation module running on the second operating system, which is connected to the second instance of the coupling module.

In other words, the present disclosure comprises a communication framework having a transformation module and a coupling module, wherein one instance of both modules is carried out by the AUTOSAR OS and one instance of both modules is carried out by the second OS. The respective transformation module then communicates with the respective operating system and the respective coupling module. The two instances of the coupling module are then communicating with each other in order to facilitate a data exchange between the two operating systems hosted on the electronic control unit. Due to the uniform approach in both operating systems, a seamless communication between both operating systems can be achieved. Latency, complexity and memory usage can therefore be reduced, which e.g. allows for a better real-time behavior of the electronic control unit and therefore allows for higher processing speeds (e.g. in autonomous driving applications).

The electronic control unit may execute functions of the vehicle. For example, the electronic control unit may execute a function that is necessary for autonomous driving, lane assistance, adaptive cruise control, driver information services etc. The electronic control unit may therefore be coupled with sensors and/or actors, wherein sensor data is processed by the AUTOSAR OS and by the second OS, wherein the processing may yield actor commands that are produced by the AUTOSAR OS and/or the second OS and are then transmitted to the respective actors. The sensors and/or actors can be connected to the electronic control unit via an in-vehicle data network.

The second OS may be Linux, Android or QNX.

The AUTOSAR OS may provide the runtime environment which is a middleware that allows software applications (for example the mentioned SWC) to communicate with hardware and to execute basic functions of the electronic control unit. The SWC may for example process LiDAR or RADAR data or may provide calculations for autonomous driving.

The electronic control unit may comprise an MCU and a performance processor which may be part of an SOC (System-on-chip), i.e. a processing unit. On the electronic control unit at least two different operating systems are hosted, wherein one of the operating systems is AUTOSAR. It may be possible to host more than two operating systems, e.g. AUTOSAR and two instances of Linux.

For the communication of the different operating systems the communication framework comprises a transformation module and a coupling module. These modules can be re-used in additional operating systems. In this disclosure usually only the AUTOSAR and the second operating system are mentioned. Nevertheless, a third or fourth (or further) operating system can also be utilized. In every other OS also an instance of the transformation and coupling module may be executed which allows the coupling modules to communicate with each other. This, in turn, allows a seamless communication between the operating systems. The transformation and the coupling modules provide an abstraction; therefore, communication is possible independent of the used processor architecture.

In order to adapt the transformation module to a specific operating system (e.g. AUTOSAR or Linux), the source code of the transformation module may be compilated for the specific operating system. Furthermore, a data transformation handling schema that is adapted to the specific operating system can be applied. The data transformation handling schema can provide a consistent data serialization and de-serialization.

Upon start of operation of the transformation module a static data structure for receiving and/or transmitting can be used. For data transmission, the transformation module can provide encryption and decryption, an end-to-end protection and/or connection based services.

In order to adapt the coupling module to the specific operating system, the source code of the coupling module may be compilated for the specific operating system. Also, the coupling module may comprise a memory and interrupt schema that complies with the used processor architecture.

It is to be noted that some functionality in this disclosure may be described in the context of the transformation module or in the context of the coupling module. It is to be understood that the functionality of the modules can be transferred into another module or can be merged into one module. It is also possible to split the functionality in other/different modules.

According to an embodiment, the transformation module creates an abstraction layer for the operating system, wherein the abstraction layer comprises the data interface which allows communication with the second operating system or with the AUTOSAR operating system. The transformation module may therefore create an abstraction for the RTE and/or for the second OS. Due to the abstraction, the OS may only require information about the data interface to communicate with another operating system.

According to an embodiment, the transformation module interacts with the coupling module to identify the status and availability of the connection to the second operating system. In other words, the transformation module may provide a feedback to at least one of the RTE and the SWC. This feedback can particularly be provided when the RTE or the SWC requests communication with the second operating system.

According to an embodiment, the first instance of the coupling module establishes a connection to the second instance of the coupling module, wherein data transferred to the data interface provided by the abstraction layer of the transformation modules are transmitted via the connection. For example, data that is to be transmitted between different operating systems may first be serialized by an instance of the transformation module, may then be transmitted to the first instance of the coupling module and may then be transmitted via the connection to the second instance of the coupling module. The second instance of the coupling module then transmits the data to the second instance of the transformation module. The second instance of the transformation module deserializes the data and provides to the second operating system. The different instances of the coupling modules may therefore manage the communication between the different operating systems. According to an embodiment, the electronic control unit comprises a plurality of processing cores. Each of the operating systems may be hosted on a separate core. For example, the AUTOSAR OS may be hosted on core #1, whereas the second operating system (e.g. Linux) may be hosted on core #2. In other words, a processing unit of the electronic control unit may comprise several cores. Due to the distribution of the different operating systems over the different cores, the communication framework may allow an intra-core communication.

For the intra-core communication, particularly the coupling module may use one or more of different mechanisms. The mechanisms can comprise shared memory, virtual ethernet and/or onboard bus systems (e.g. PCI express, Highspeed Serial Link (HSSL)). Shared memory can use interrupts or spinlock, for example.

According to an embodiment, the SWC defines ports of the communication with the RTE, wherein the data interface is based on the ports defined by the SWC. The SWC may define required send and receive ports (pports and rports) in a description (SWCD-software component description). The software component description may comprise two tables, i.e. for send ports (tx) and receive ports (rx). The data interface may then provide at least some or all of the ports defined in the SWCD. In addition, the data interface may also be based on information about the data types that are used by the SWC. Both instances of the transformation module (which provides the data interface) may use the same information about the ports and data types to provide their respective data interface.

Due to the use of the SWCD for the data interface, the SWC can seamlessly communicate with the second operating system and e.g. transfer and receive data to/from the second operating system. According to an embodiment, the electronic control unit stores a configuration file, wherein the configuration file defines the properties of the data interface and a data model. The data model may comprise the data types and the size of the data. The stored properties of the data interface may be derived from the ports defined in the SWCD. The data types of the configuration file may be used for the set up of the data interface in the transformation module. The information about the size of the data may be required by the coupling module to provide the communication with other operating systems. The configuration file may be in the form of a Json-file or an XML-file.

According to an embodiment, the transformation module ensures that the requirements of the AUTOSAR operating system are fulfilled during a communication between the AUTOSAR operating system and the second operating system. Particularly, the transformation module ensures that the timing requirements, requirements of data structure and/or requirements of data types of the AUTOSAR operating system are fulfilled. In particular, this refers to the first instance of a transformation module. In the same manner, the second instance of the transformation module may ensure that the requirements of the second operating system again, in relation to timing requirements, requirements of data structure and/or data types are fulfilled.

Particularly, the transformation module and the coupling module can use the properties of the data interface, which may be derived from the ports defined in the SWCD. When the SWCD is compliant with the AUTOSAR OS requirements, then the transformation module and the coupling module will automatically also be compliant with the AUTOSAR OS requirements, as the modules use the (provided) properties of the data interface. Thereby, e.g. real-time requirements of AUTOSAR are fulfilled.

According to an embodiment, the SWC performs at least one function of autonomous driving, Lidar sensing and Radar sensing. The second operating system may be required to correctly process the function of autonomous driving and e.g. process the sensor data of a LiDAR or RADAR.

In another aspect, the present disclosure is directed at a vehicle comprising an electronic control unit as described herein.

In another aspect, the present disclosure is directed at a computer-implemented method, the method comprising
- hosting an AUTOSAR operating system and a second operating system which is different from AUTOSAR,
- providing a runtime environment, RTE, in the AUTOSAR operating system for the execution of a software component, SWC,
- executing a communication framework which provides communication functionality to allow communication between the AUTOSAR operating system and the second operating system,
- providing a transformation module having a data interface, the transformation module processes requested communication and serializes and/or deserializes data of the requested communication, and
- providing a coupling module which is connected to one transformation module and which establishes communication between the operating systems,
- running, on the AUTOSAR operating system, a first instance of the transformation module, which processes requested communication of the RTE and serializes and/or deserializes data of the communication,
- running, on the AUTOSAR operating system, a first instance of the coupling module,
- running, on the second operating system, a second instance of the coupling module, which establishes communication with the first instance of the coupling module,
- running, on the second operating system, a second instance of the transformation module, which is connected to the second instance of the coupling module.

The disclosure made in relation to the electronic control unit is also valid for the vehicle and for the computer-implemented method. This is particularly true for the embodiments and advantages mentioned herein.

The electronic control unit may be a computer system that may comprise a processing unit, at least one memory unit and at least one non-transitory data storage. The non-transitory data storage and/or the memory unit may comprise a computer program for instructing the electronic control unit to perform several or all steps or aspects of the computer implemented method described herein.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Secondmore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

It is to be noted that this disclosure defines several steps that specific modules or components are performing. It is to be understood that these modules or components are each adapted to perform the disclosed actions.

### DRAWINGS

Exemplary embodiments and functions of the present disclosure are described herein in conjunction with the following drawings, showing schematically:
- Fig. 1: a vehicle having an electronic control unit;
- Fig. 2: the ports between the runtime environment and a software component in an AUTOSAR operating system;
- Fig. 3: the communication of an AUTOSAR operating system with two other operating systems hosted on the same electronic control unit.

### DETAILED DESCRIPTION

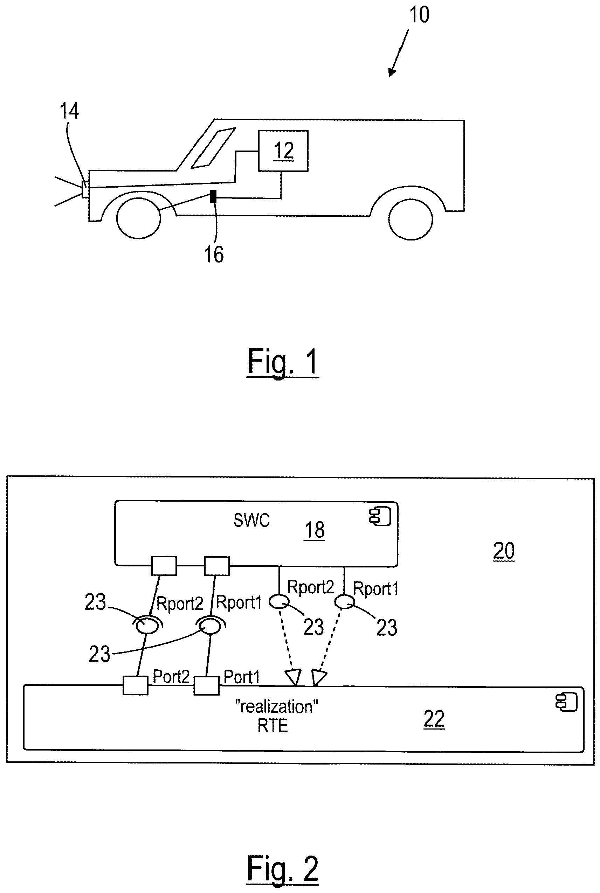

Fig. 1 depicts a vehicle 10 having an electronic control unit (ECU) 12. The electronic control unit 12 is connected to a camera 14 and a steering mechanism 16.

The electronic control unit 12 performs a lane guide function, wherein images of the camera 14 are processed by the ECU 12 in order to hold the vehicle 10 within a lane (not shown). If necessary, the ECU 12 sends commands to the steering mechanism 16 to keep the vehicle 10 in the lane.

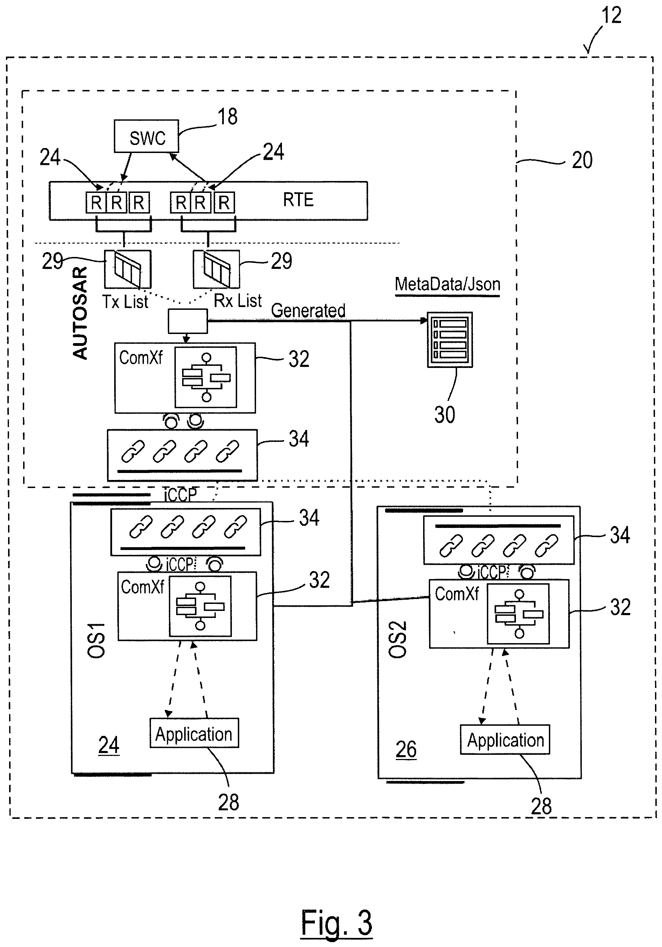

In order to perform the processing of the camera images, the ECU 12 uses three different operating systems, as will be later described with respect to Fig. 3.

Fig. 2 shows a software component (SWC) 18 of an AUTOSAR operating system 20. The AUTOSAR operating system 20 provides a runtime environment (RTE) 22. The RTE 22 and the SWC 18 are communicating with each other via ports 23.

According to an embodiment, the ports shown in Fig. 2 can provide a sender/receiver communication in which data elements are transmitted from the SWC 18 to other software components of the AUTOSAR OS 20, e.g. to the RTE 22.

Fig. 3 schematically shows the functions and operating systems executed in the ECU 12. The ECU 12 hosts the AUTOSAR OS 20 and a second operating system 24 as well as a third operating system 26. The second and third operating systems 24, 26 may be instances of Linux.

In both the second and third operating system 24, 26 an application 28 is executed, wherein the applications 28 are required to work together with the SWC 18 in order to execute the lane control functionality of the ECU 12. Therefore, a communication between the AUTOSAR OS 20 and the second and third OS 24, 26 is necessary.

In order to provide the communication, the ports 23 and the data types that are transmitted via the ports 23 by the SWC 18 are first collected in port lists 29 and then stored in a Json configuration file 30.

Based on the configuration file 30 a first instance of a transformation module 32 (also called *ComXf)* is generated in the AUTOSAR OS 20. The first instance of the transformation module 32 provides a data interface (not shown) having the ports 23 that are required by the SWC 18. The transformation module 32 communicates with a first instance of a coupling module 34. The coupling module 34 is also called *iCCP* in Fig. 3.

The coupling module 34 also has instances in the second and third operating system 24, 26, wherein each of the instances of the coupling module 34 can communicate with each other. In each of the second and third operating systems 24, 26 a second instance of the transformation module 32 is executed which communicates with the respective instance of the coupling module 34 and the application 28. Data can thereby be exchanged via a chain of the first instance of the transformation module 32, the first instance of the coupling module 34, one of the second instances of the coupling module 34 and one of the second instances of the transformation module 32. Thereby, the applications 28 can communicate with the SWC 18.

In operation, the SEC 18 can e.g. receive image data from the camera 14. The SWC 18 can then provide part of the image data to the applications 28 in order for the applications 28 to perform computations on the image data. The result of the computation can then be transmitted back from the application 28 to the SWC 18. The SWC 18 can then control the steering mechanism 16.

The disclosure thus provides a possibility to easily set up a communication between different operating systems that may be hosted on different cores of the same processor.

### Reference numeral list

- 10: vehicle
- 12: electronic control unit
- 14: camera
- 16: steering mechanism
- 18: SWC
- 20: AUTOSAR operating system
- 22: RTE
- 23: ports
- 24: second operating system
- 26: third operating system
- 28: application
- 29: port list
- 30: configuration file
- 32: transformation module
- 34: coupling module

## Claims

1. An electronic control unit (12) for a vehicle (10), wherein
- the electronic control unit (12) hosts an AUTOSAR operating system (20) and a second operating system (24, 26) which is different from AUTOSAR,
- the AUTOSAR operating system (20) provides a runtime environment, RTE (22), for the execution of a software component, SWC (18),
- the electronic control unit (12) executes a communication framework which provides communication functionality to allow communication between the AUTOSAR operating system (20) and the second operating system (24, 26),
wherein the communication framework comprises
- a transformation module (32) having a data interface, the transformation module (32) processes requested communication and serializes and/or deserializes data of the requested communication, and
- a coupling module (34) which is connected to one transformation module (32) and which establishes communication between the operating systems,
wherein the electronic control unit (12) executes
- a first instance of the transformation module (32) running on the AUTOSAR operating system (20), which processes requested communication of the RTE (22) and serializes and/or deserializes data of the communication,
- a first instance of the coupling module (34) running on the AUTOSAR operating system (20),
- a second instance of the coupling module (34) running on the second operating system (24, 26), which establishes communication with the first instance of the coupling module (34),
- a second instance of the transformation module (32) running on the second operating system (24, 26), which is connected to the second instance of the coupling module (34).

2. The electronic control unit (12) of claim 1, wherein
the transformation module (32) creates an abstraction layer for the operating system (20, 24, 26), wherein the abstraction layer comprises the data interface which allows communication with the second operating system (24, 26) or with the AUTOSAR operating system (20).

3. The electronic control unit (12) of at least one of the previous claims,
wherein
the transformation module (32) interacts with the coupling module (34) to identify the status and availability of the connection to the second operating system (24, 26).

4. The electronic control unit (12) of at least one of the previous claims,
wherein
the first instance of the coupling module (34) establishes a connection to the second instance of the coupling module (34), wherein data transferred to the data interfaces provided by the abstraction layer of the transformation modules (32) are transmitted via the connection.

5. The electronic control unit (12) of at least one of the previous claims,
wherein
the electronic control unit (12) comprises a plurality of processing cores, wherein each operating system is hosted on a separate core.

6. The electronic control unit (12) of at least one of the previous claims,
wherein
the SWC (18) defines ports for the communication with the RTE (22), wherein the data interface is based on the ports defined by the SWC (18).

7. The electronic control unit (12) of at least one of the previous claims,
wherein
the electronic control unit (12) stores a configuration file, wherein the configuration file defines the properties of the data interface and a data model.

8. The electronic control unit (12) of at least one of the previous claims,
wherein
the transformation module (32) ensures that the requirements of the AUTOSAR operating system (20) are fulfilled during a communication between the AUTOSAR operating system (20) and the second operating system (24, 26).

9. The electronic control unit (12) of at least one of the previous claims,
wherein
the SWC (18) performs at least one of the functions of autonomous driving, LiDAR sensing, RADAR sensing.

10. A vehicle (10) comprising an electronic control unit (12) of at least one of claims 1 to 9.

11. A computer-implemented method, the method comprising
- hosting an AUTOSAR operating system (20) and a second operating system (24, 26) which is different from AUTOSAR,
- providing a runtime environment, RTE (22), in the AUTOSAR operating system (20) for the execution of a software component, SWC (18),
- executing a communication framework which provides communication functionality to allow communication between the AUTOSAR operating system (20) and the second operating system (24, 26),
- providing a transformation module (32) having a data interface, the transformation module (32) processes requested communication and serializes and/or deserializes data of the requested communication, and
- providing a coupling module (34) which is connected to one transformation module (32) and which establishes communication between the operating systems,
- running, on the AUTOSAR operating system (20), a first instance of the transformation module (32), which processes requested communication of the RTE (22) and serializes and/or deserializes data of the communication,
- running, on the AUTOSAR operating system (20), a first instance of the coupling module (34),
- running, on the second operating system (24, 26), a second instance of the coupling module (34), which establishes communication with the first instance of the coupling module (34),
- running, on the second operating system (24, 26), a second instance of the transformation module (32), which is connected to the second instance of the coupling module (34).
